# EUROPÄISCHE PATENTSCHRIFT

(11) **EP 0 616 442 B1**
(45) Veröffentlichungstag und Bekanntmachung des Hinweises auf die Patenterteilung: **26.11.1997**
(21) Anmeldenummer: 93104559.5
(22) Anmeldetag: 19.03.1993
(51) Int. Cl.: H04B 10/24

(54) **Sende-/Empfangsschaltung in einem passiven optischen Telekommunikationssystem**
Emitter/receiver circuit in a passive optical telecommunication system
Circuit d'émission/réception dans un système optique passif de télécommunications

(43) Veröffentlichungstag der Anmeldung: 21.09.1994
(73) Patentinhaber: SIEMENS AKTIENGESELLSCHAFT, 80333 München (DE)
(72) Erfinder: Bolze, Thomas, Dr., W-8000 München 40 (DE)

(56) Entgegenhaltungen:
- EP-A- 0 032 992
- DE-A- 4 125 075
- PATENT ABSTRACTS OF JAPAN vol. 8, no. 8 (E-221)(1445) 13. Januar 1984
- PATENT ABSTRACTS OF JAPAN vol. 8, no. 4 (E-220)(1441) 10. Januar 1984
- PATENT ABSTRACTS OF JAPAN vol. 8, no. 250 (E-279)(1687) 16. November 1984

## Beschreibung

Neuere Entwicklungen der Fernmeldetechnik führen in der Ebene der Teilnehmeranschlußleitungen zu passiven optischen Telekommunikationssystemen, in denen jeweils eine Mehrzahl von dezentralen Einrichtungen (Teilnehmerstellen oder jeweils eine Mehrzahl von Teilnehmerstellen Zusammenfassenden sog. Distant Units) jeweils über eine eigene Lichtwellenleiter-Anschlußleitung mit einem optischen Verzweiger verbunden ist, der direkt oder über wenigstens einen weiteren optischen Verzweiger mit einem gemeinsamen Lichtwellenleiteranschluß einer - insbesondere durch eine Vermittlungsstelle gegebenen - zentralen Einrichtung über einen Lichtwellenleiter-Bus verbunden ist (EP-A-0 171 080; ISSLS'88, Conf. Papers 9.4.1...5; BR Telecom Technol. J. 17(1989)2, 100...113).
Senden in einem solchen passiven optischen Telekommunikationssystem die vorzugsweise durch Laserdioden gegebenen elektrooptischen Wandler der zentralen Einrichtung (Vermittlungsstelle) und der dezentralen Einrichtungen (Teilnehmerstellen oder Distant Units) optische Digitalsignale im Basisband mit der gleichen Wellenlänge, d.h. im Gleichlageverfahren, so können die von einer solchen nikationsstelle ausgesendeten optischen Signale auf Grund von Reflexionen im Glasfasernetz im vorzugsweise durch eine PIN-Diode gegebenen eigenen Empfänger wirksam werden (optisches Nebensprechen) und damit dessen Empfangsempfindlichkeit deutlich herabsetzen. Kritisch ist dabei insbesondere die etwa bei 1 bis 10 % liegende Reflektivität von in dezentralen Einrichtungen als elektrooptische Wandler vorgesehenen Laserdioden, da einerseits Maßnahmen zur Reflexionsminderung bei Laserdioden zu einer schlechteren Ankopplung des Lasers an die Glasfaser und somit zu einer niedrigeren optischen Leistung in der Glasfaser führen, andererseits aber Anteile des von der zentralen Einrichtung ausgesendeten Lichts von sämtlichen dezentralen Einrichtungen her gleichzeitig zum optoelektrischen Wandler der zentralen Einrichtung hin reflektiert werden.

Man kann versuchen, dieser Problematik dadurch Rechnung zu tragen, daß man die Anzahl der dezentralen Einrichtungen (Teilnehmerstellen oder Distant Units) je Lichtwellenleiter-Anschluß der zentralen Einrichtung (Vermittlungsstelle) verringert und damit die Anforderungen an die Empfangsempfindlichkeit der zentralen Einrichtung entsprechend reduziert; dies zieht indessen eine Erhöhung der Anzahl von Lichtwellenleiter-Anschlüssen in der zentralen Einrichtung nach sich und führt damit ebenso zu einer erheblichen Verteuerung des ganzen Systems wie die prinzipiell ebenfalls mögliche Verwendung von optischen Isolatoren.

Die Erfindung zeigt nun einen Weg, dem im vorstehenden umrissenen Problem der Reflexion an dezentralen Laserdioden in vorteilhafter Weise zu begegnen. Die Erfindung betrifft eine Sende-/Empfangsschaltung mit einem Lichtwellenleiter-Anschluß, einem optoelektrischen Wandler für über den Lichtwellenleiter-Anschluß empfangene Lichtsignale und einem elektrooptischen Wandler für über den Lichtwellenleiter-Anschluß zu übertragende Lichtsignale, insbesondere für ein passives optisches Telekommunikationssystem, in dem jeweils eine Mehrzahl von dezentralen Einrichtungen, insbesondere Teilnehmerstellen oder eine Mehrzahl von Teilnehmerstellen zusammenfassenden sog. Distant Units, jeweils über eine eigene Lichtwellenleiter-Anschlußleitung mit einem optischen Verzweiger verbunden ist, der direkt oder über wenigstens einen weiteren optischen Verzweiger mit einem gemeinsamen Lichtwellenleiteranschluß der zentralen Einrichtung, insbesondere Vermittlungsstelle, über einen Lichtwellenleiter-Bus verbunden ist, wobei dezentrale Einrichtungen und zentrale Einrichtung optische Digitalsignale im Gleichlageverfahren senden bzw. empfangen; diese Sende/Empfangsschaltung ist erfindungsgemäß dadurch gekennzeichnet, daß in ihr der Ausgang des optoelektrischen Wandlers mit dem Eingang des elektrooptischen Wandlers über einen elektrischen Empfangssignalinverter verbunden ist und daß zwischen den Ausgang des elektrooptischen Wandlers und ihren mit diesem sowie mit dem Eingang des optoelektrischen Wandlers verbundenen Lichtwellenleiter-Anschluß eine optische Verzögerungsleitung mit auf die Arbeitszeit des elektrischen Empfangssignalinverters abgestimmter Verzögerungszeit eingefügt ist.

Es sei an dieser Stelle bemerkt, daß es (aus EP-A1-0032992) bekannt ist, an der Schnittstelle zwischen einem Halbduplex-(Zeitgetrenntlage-)Übertragungssystem und einem Simplex-(Raumgetrenntlage-) Übertragungssystem ein Drei-Eingangs-NAND-Glied vorzusehen, das ausgangsseitig direkt zum Simplex-Ausgang führt und dessen drei Eingängen die Simplex-Eingangssignale direkt und über zwei Inverterketten unterschiedlich verzögert zugeführt werden, wobei der Halbduplex-Ein-/Ausgang an einem Abgriff der kürzeren Inverterkette liegt.
Es sei weiter bemerkt, daß es (aus DE-A1-41 25 075) bekannt ist, in den dezentralen Einrichtungen eines passiven optischen Telekommunikationssystems, in dem jeweils eine Mehrzahl von dezentralen Einrichtungen jeweils über eine eigene Lichtwellenleiter-Anschlußleitung mit einem optischen Verzweiger verbunden ist, der direkt oder auch über weitere optische Verzweiger mit einem gemeinsamen Lichtwellenleiteranschluß der zentralen Einrichtung verbunden sind, die Sendelichtleistung nach Maßgabe der in der jeweiligen dezentralen Einrichtung von der zentralen Einrichtung her empfangenen Lichtleistung einzustellen.
Nähere Berührungspunkte mit der vorliegenden Erfindung sind nicht gegeben.

Die Erfindung, die sich den Umstand zunutze macht, daß die Empfangsempfindlichkeit eines optoelektrischen Wandlers sich besonders bei schwankender Intensität des empfangenen Lichts verschlechtert, während ein konstanter Lichtpegel bei entsprechendem Empfängerdesign nur einen geringen Einfluß auf die Empfangsempfindlichkeit hat, bringt den Vorteil mit sich, eine durch reflektierte Sende-Lichtsignalanteile im Bitmuster des Sendesignals insbesondere der zentralen Einrichtung hervorgerufene Übersteuerung des eigenen optoelektrischen Wandlers und eine damit verbundene, dem Bitmuster des Sendesignals entsprechende Beeinträchtigung der Empfangsempfindlichkeit für nachfolgende Empfangs-Lichtsignale zu vermeiden.

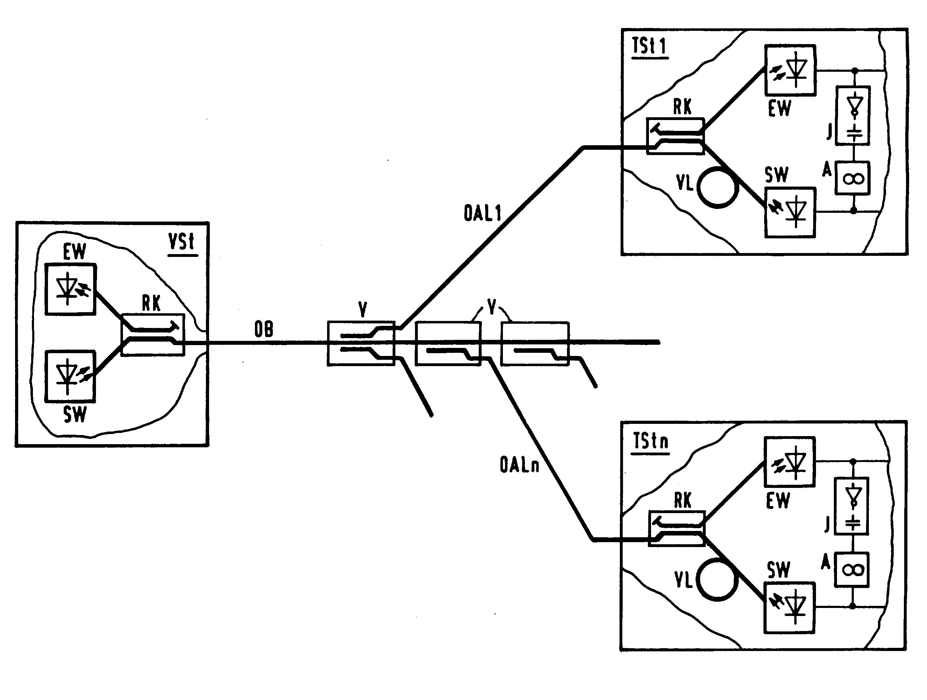

Weitere Besonderheiten der Erfindung werden aus der nachfolgenden Beschreibung anhand der Zeichnung ersichtlich, in der schematisch ein bidirektionales Lichtwellenleiter-Telekommunikationssystem mit einer Mehrzahl von Sende-/ Empfangsschaltungen gemäß der Erfindung dargestellt ist.

In dem in der Zeichnung skizzierten bidirektionalen LWL-Telekommunikationssystem erstreckt sich ein passives (vorzugsweise Monomode-)LWL-Busnetz zwischen einer zentralen Telekommunikationseinrichtung VSt, bei der es sich beispielsweise um eine Vermittlungsstelle handeln kann, und einer Mehrzahl von dezentralen Telekommunikationseinrichtungen TSt1,...,TStn. Solche dezentralen Telekommunikationseinrichtungen können Teilnehmerstellen oder jeweils eine Mehrzahl von Teilnehmerstellen zusammenfassende sog. Distant Units sein, d.h. mit einem elektrooptischen Sendewandler SW und einem optoelektrischen Empfangswandler EW versehene Interface-Einrichtungen, die ggf. mit Hilfe eines auf der elektrischen Seite des Sende- bzw. Empfangswandlers liegenden, in der Zeichnung nicht weiter dargestellten Multiplexers bzw. Demultiplexers z.B. bis zu 32 ISDN-B-Kanäle zusammenfassen bzw. aufsplitten mögen.
In diesem LWL-Telekommunikationssystem sind die dezentralen Einrichtungen TSt über einen einfaserigen LWL-Bus OB mit einem gemeinsamen LWL-Multiplexanschluß der zentralen Telekommunikationseinrichtung VSt verbunden; die den einzelnen dezentralen Einrichtungen TSt1,...,TStn zugehörigen LWL-Anschlußleitungen OAL1,...,OALn mögen dabei über - z.B. in Kabelverzweigergehäusen untergebrachte - passive optische Verzweiger V mit dem zugehörigen LWL-Bus OB verbunden sein, und zwar entweder direkt oder auch über weitere solche Verzweiger. Als optische Verzweiger können dabei beispielsweise Durchgangsmischer oder optische Richtkoppler Anwendung finden. Wie in der Zeichnung angedeutet ist, ist es, wie dies an sich (z.B. aus EP-A-0 171 080) bekannt ist, auch möglich, einer Mehrzahl von Lichtwellenleiter-Anschlußleitungen(OAL) gemeinsame optische zweiger vorzusehen.

In dem in der Zeichnung skizzierten Telekommunikationssystem mögen die einzelnen Telekommunikationseinrichtungen TSt1,...,TStn und VSt jeweils mit einem optoelektrischen Empfangswandler EW mit einer PIN-Diode und einem elektrooptischen Sendewandler SW mit einer Laserdiode versehen sein; zur Entkopplung von elektrooptischen Sendewandlern SW und optoelektrischen Empfangswandlern EW und insoweit auch zur Richtungstrennung ist zwischen zugehörige Lichtwellenleiter-Anschlußleitung DAL (bzw. OB) einerseits und optoelektrischen Empfangswandler EW und elektrooptischen Sendewandler SW andererseits ein optischer Richtkoppler (2x2-Koppler) RK eingefügt. Die Telekommunikationseinrichtungen TSt1,...,TStn, und VSt mögen optische Digitalsignale im Gleichlageverfahren senden bzw. empfangen.

Um nun zu verhindern, daß von den Laserdioden der in den dezentralen Einrichtungen TSt1,...,TStn enthaltenen elektrooptischen Wandler SW reflektierte Anteile von Digital-Lichtsignalen, die von der zentralen Einrichtung VSt ausgesendet wurden, im Bitmuster des ausgesendeten und anteilig reflektierten Digital-Lichtsignals die Empfindlichkeit des elektrischen Wandlers EW der zentralen Einrichtung VSt einträchtigen, sind die dezentralen Telekommunikationseinrichtungen TSt1,...,TStn mit Sende-/Empfangsschaltungen gemäß der Erfindung versehen: Wie die Zeichnung zeigt, ist dort jeweils der Ausgang des optoelektrischen Wandlers EW mit dem Eingang des elektrooptischen Wandlers SW über einen elektrischen Empfangssignalinverter J verbunden, und zugleich ist zwischen den Ausgang des elektrooptischen Wandlers SW und den dessen Ausgang mit der Lichtwellenleiter-Anschlußleitung OAL - bzw. letztere mit dem Eingang des toelektrischen Wandlers EW - verbindenden optischen Richtkoppler eine optische Verzögerungsleitung VL eingefügt, deren Verzögerungszeit auf die Arbeitszeit des elektrischen Empfangssignalinverters J abgestimmt ist. Für eine Verzögerungszeit von etwa 0,5 bis 5 ns wird dabei eine etwa 10 bis 100 cm lange Glasfaser benötigt.

Das in der Zeichnung skizzierte bidirektionale LWL-Telekommunikationssystem arbeitet dann im Prinzip wie folgt:
Wurde von der zentralen Telekommunikationseinrichtung VSt ein durch maximale optische Leistung charakterisiertes Lichtsignalelement "1" ausgesendet, so gelangt dieses über den LWL-Bus OB und die passiven optischen Verzweiger V zu den einzelnen dezentralen Telekommunikationseinrichtungen TStl,...,TStn und dort über den jeweiligen optischen Richtkoppler RK einerseits zum Empfangswandler EW und andererseits zum Sendewandler SW, wobei an der Laserdiode des letzteren ein Teil der optischen Leistung reflektiert wird. Das am Ausgang des Empfangswandlers EW auftretende elektrische "1"-Signalelement steuert auch den elektrischen EmpfangssignalinverterJ an, so daß an dessen Ausgang ein "0"-Signalelement auftritt, das seinerseits zum Eingang des Sendewandlers SW gelangt, wo es keine zusätzliche Aussteuerung der Laserdiode bewirkt.
Wurde von der zentralen Telekommunikationseinrichtung VSt ein durch minimale optische Leistung charakterisiertes Lichtsignalelement "0" ausgesendet, so gelangt dieses wiederum über den LWL-Bus OB und die passiven optischen Verzweiger V zu den einzelnen dezentralen Telekommunikationseinrichtungen TSt1,...,TStn und dort über den jeweiligen optischen Richtkoppler RK einerseits zum Empfangswandler EW und andererseits zum Sendewandler SW, wobei wiederum an der Laserdiode des letzteren ein Teil der optischen Leistung reflektiert wird. Das jetzt am Ausgang des Empfangswandlers EW auftretende elektrische "0"-Signalelement steuert auch den elektrischen Empfangssignalinverter J an, so daß an dessen Ausgang nunmehr ein "1"-Signalelement auftritt, das seinerseits zum Eingang des Sendewandlers SW gelangt. Dieses "1"-Signalelement bewirkt nun eine zusätzliche Aussteuerung der Laserdiode des Sendewandlers SW, so daß sie einschließlich des von ihr reflektierten Anteils des nach einem Durchlaufen der optischen Verzögerungsleitung VL gerade eintreffenden Lichtsignalelements "0" gerade eine Lichtleistung abgibt, die gleich der Lichtleistung ist, die zuvor bei Eintreffen eines Lichtsignalelements "1" abgegeben wurde; die Summe von auf Grund empfangener Lichtsignalelemente reflektierter und ggf. zusätzlich ausgesendeter Lichtleistung wird somit unabhängig davon, ob "0"- oder "1"-Lichtsignalelemente empfangen werden, auf einem gleichbleibenden Pegel gehalten. In der zentralen Telekommuniaktionseinrichtung VSt hat dies schließlich zur Folge, daß der Empfangslichtpegel ebenfalls unabhängig vom Bitmuster des eigenen Sendelichtsignals ist, womit eine dem Bitmuster des Sendelichtsignals entsprechende Beeinträchtigung der Empfangsempfindlichkeit des optoelektrischen Wandlers EW der zentralen Telekommunikationseinrichtung VSt vermieden ist.

Der elektrische Empfangssignalinverter J, der, wie dies auch in der Zeichnung angedeutet ist, mit einem invertierenden Verstärker gebildet sein kann, kann mit einer nachfolgenden Stromquellenschaltung A zur zusätzlichen Aussteuerung der Laserdiode des Sendewandlers SW kapazitiv verbunden sein, so daß der von der Stromquellenschaltung A abgegebene Steuerstrom i der mittleren empfangenen optischen Leistung entspricht mit der Folge, daß bei einer z.B. auf Grund eines Langzeitdriftens der in der zentralen Einrichtung VSt wirsamen Laserdiode (SW) oder auch auf Grund von Änderungen in der Konfiguration des LWL-Telekommunikationssystems auftretenden Erhöhung oder Verringerung der in der dezentralen Einrichtung TSt empfangenen optischen Leistung auch die zusätzliche Aussteuerung ihrer Laserdiode entsprechend erhöht bzw. verringert wird; die Summe von auf Grund empfangener Lichtsignalelemente reflektierter und ggf. zusätzlich ausgesendeter Lichtleistung wird somit auch bei variierender optischer Empfangsleistung auf einem gleichbleibenden Pegel gehalten.

## Patentansprüche

1. Sende-/Empfangsschaltung mit einem Lichtwellenleiter-Anschluß, einem optoelektrischen Wandler (EW) für über den Lichtwellenleiter-Anschluß empfangene Lichtsignale und einem elektrooptischen Wandler (SW) für über den Lichtwellenleiter-Anschluß zu übertragende Lichtsignale, insbesondere für ein passives optisches Telekommunikationssystem, in dem jeweils eine Mehrzahl von dezentralen Einrichtungen (TSt1,...,TStn), insbesondere Teilnehmerstellen oder eine Mehrzahl von Teilnehmerstellen zusammenfassenden sog. Distant Units, jeweils über eine eigene Lichtwellenleiter-Anschlußleitung (OAL1,...,OALn) mit einem optischen Verzweiger (V) verbunden ist, der direkt oder über wenigstens einen weiteren optischen Verzweiger (V) mit einem gemeinsamen Lichtwellenleiteranschluß der zentralen Einrichtung (VSt), insbesondere Vermittlungsstelle, über einen Lichtwellenleiter-Bus (OB) verbunden ist, wobei dezentrale Einrichtungen (TSt1,...,TStn) und zentrale Einrichtung (VSt) optische Digitalsignale im Gleichlageverfahren senden bzw. empfangen,
**dadurch gekennzeichnet,**
daß in ihr der Ausgang des optoelektrischen Wandlers (EW) mit dem Eingang des elektrooptischen Wandlers (SW) über einen elektrischen Empfangssignalinverter (J) verbunden ist und daß zwischen den Ausgang des elektrooptischen Wandlers (SW) und ihren mit diesem sowie mit dem Eingang des optoelektrischen Wandlers (EW) verbundenen Lichtwellenleiter-Anschluß eine optische Verzögerungsleitung (VL) mit auf die Arbeitszeit des elektrischen Empfangssignalinverters (J) abgestimmter Verzögerungszeit eingefügt ist.

2. Sende-/Empfangsschaltung nach Anspruch 1,
**dadurch gekennzeichnet,**
daß die optische Verzögerungsleitung (VL) zwischen den Ausgang des elektrooptischen Wandlers (SW) und einen den Lichtwellenleiter-Anschluß der Sende-/Empfangsschaltung mit dem Eingang des optoelektrischen Wandlers (EW) und dem Ausgang des elektrooptischen Wandlers (SW) verbindenden optischen Richtkoppler (RK) eingefügt ist.

3. Sende-/Empfangsschaltung nach Anspruch 1 oder 2,
**gekennzeichnet durch**
eine einer Änderung des Pegels empfangener "1"-Lichtsignalelemente entsprechende Änderung der zusätzlichen Austeuerung des elektrooptischen Wandlers (SW) durch den elektrischen Empfangssignalinverter (J).

## Claims

1. Transceiver circuit having an optical fibre connection, an optical-to-electrical transducer (EW) for light signals received via the optical fibre connection, and an electrical-to-optical transducer (SW) for light signals to be transmitted via the optical fibre connection, in particular for a passive optical telecommunication system in which, in each case, a plurality of decentral devices (TSt1, ..., TStn), in particular subscriber stations or so-called distant units combining a plurality of subscriber stations are respectively connected via a dedicated optical fibre subscriber line (OAL1, ..., OALn) to an optical coupler (V) which is connected directly or via at least one further optical coupler (V) to a common optical fibre connection of the central device (VSt), in particular an exchange, via an optical fibre bus (OB), decentralized devices (TSt1, ...., TStn) and a central device (VSt) transmitting or receiving optical digital signals in common-frequency operation, characterized in that in the circuit the output of the optical-to-electrical transducer (EW) is connected to the input of the electrical-to-optical transducer (SW) via an electrical received signal inverter (J), and in that there is inserted between the output of the electrical-to-optical transducer (SW) and its optical fibre connection, which is connected to the said transducer (SW) and to the input of the optical-to-electrical transducer (EW), an optical delay line (VL) having a delay time tuned to the operating time of the electrical received signal inverter (J).

2. Transceiver circuit according to Claim 1, characterized in that the optical delay line (VL) is inserted between the output of the electrical-to-optical transducer (SW) and an optical directional coupler (RK) connecting the optical fibre connection of the transceiver circuit to the input of the optical-to-electrical transducer (EW) and the output of the electrical-to-optical transducer (SW).

3. Transceiver according to Claim 1 or 2, characterized by a change, corresponding to a change in the level of received "1" light signal elements, in the additional modulation of the electrical-to-optical transducer (SW) by the electrical received signal inverter (J).

## Revendications

1. Circuit d'émission/réception comportant un raccordement de guides d'ondes lumineuses, un convertisseur opto-électronique (EW) pour des signaux lumineux reçus par l'intermédiaire du raccordement de guides d'ondes lumineuses, et un convertisseur électro-optique (SW) pour des signaux lumineux à transmettre par l'intermédiaire du raccordement de guides d'ondes lumineuses, notamment pour un système de télécommunications optique passif, dans lequel une multiplicité de dispositifs décentralisés (TSt1 à TStn) notamment des postes d'abonnés ou ce que l'on appelle des Distant Units rassemblant une multiplicité de postes d'abonnés, sont reliés respectivement par l'intermédiaire d'une ligne de raccordement de guides d'ondes lumineuses propre (OAL1 à OALn) à une boîte (V) de dérivation optique, qui est reliée, directement ou par l'intermédiaire d'au moins une boîte de dérivation optique supplémentaire (V), à un raccordement de guides d'ondes lumineuses commun du dispositif central (VSt), notamment du central, par l'intermédiaire d'un bus (OB) de guides d'ondes lumineuses, les dispositifs décentralisés (TSt1 à TStn) et le dispositif central (VSt) émettant ou recevant des signaux numériques optiques en exploitation sur fréquence porteuse commune,
caractérisé en que
dans ce circuit, la sortie du convertisseur opto-électrique (EW) est reliée à l'entrée du convertisseur (SW) électro-optique par l'intermédiaire d'un inverseur (J) électrique de signal de réception et une ligne (VL) optique à retard, dont le temps de retard est accordé au temps de travail de l'inverseur (J) électrique de signal de réception, est insérée entre la sortie du convertisseur (SW) électro-optique et son raccordement de guides d'ondes lumineuses relié à celui-ci ainsi qu'à l'entrée du convertisseur (EW) opto-électrique.

2. Circuit d'émission/réception suivant la revendication 1,
caractérisé en ce que
la ligne (VL) optique à retard est insérée entre la sortie du convertisseur (SW) électro-optique et un coupleur (RK) directif reliant le raccordement de guides d'ondes lumineuses du circuit d'émission/réception à l'entrée du convertisseur (EW) opto-électrique et la sortie du convertisseur (SW) électro-optique.

3. Circuit d'émission/réception suivant la revendication 1 ou 2,
caractérisé par une modification, correspondant à une modification du niveau d'éléments de signaux lumineux "1" reçus, de la modulation supplémentaire du convertisseur (SW) électro-optique par l'inverseur (J) électrique de signal de réception.
